# EUROPEAN PATENT SPECIFICATION

(11) **EP 0 577 960 B1**
(45) Date of publication and mention of the grant of the patent: **28.04.2004**
(21) Application number: 93108309.1
(22) Date of filing: 22.05.1993
(51) Int. Cl.: H04Q 7/20

(54) **Improvements relating to mobile radio networks**
Verbesserungen in Beziehung zu Mobilfunknetzen
Perfectionnements conçernant des réseaux radio-mobile

(30) Priority: 24.06.1992 GB 9213373; 09.07.1992 GB 9214572
(43) Date of publication of application: 12.01.1994
(73) Proprietor: Siemens Aktiengesellschaft, 80333 München (DE)
(72) Inventor: McTiffin, Michael John, Winchester, Hampshire SO22 5LH (GB)
(74) Representative: Payne, Janice Julia

(56) References cited:
- EP-A- 0 366 342
- EP-A- 0 426 269
- IEEE GLOBAL TELECOMMUNICATIONS CONFERENCE, PHOENIX vol. 3, 2 December 1991, NEW-YORK (US) pages 1912 - 1916 M.M.-K. LIU 'Base Station Networking in Personal Communications'

## Description

The present invention relates to improvements relating to mobile radio networks, and in particular to those which use asynchronous transmission mode (ATM) network.

The efficient operation of such mobile networks require rapid changes in mobile affiliation which will have to be supported by the underlying network. If such changes in affiliation were always to require network switching the response times could be too long.

In GB 2 268 359 a technique is described where permanent virtual paths are set up across the ATM network between base stations and a particular interface point, to a fixed network. The interface point is known as a mobile network interface unit. Within the area controlled by this interface unit, the virtual channel identifier (VCI) is given global significance and is used to designate the call. This method requires no network switching to support changes in affiliation as long as the mobile unit remains in the area connected to a particular mobile network interface unit.

It will be appreciated that the term "call" used throughout the specification also includes the set up of a connection, eg., for signalling purposes.

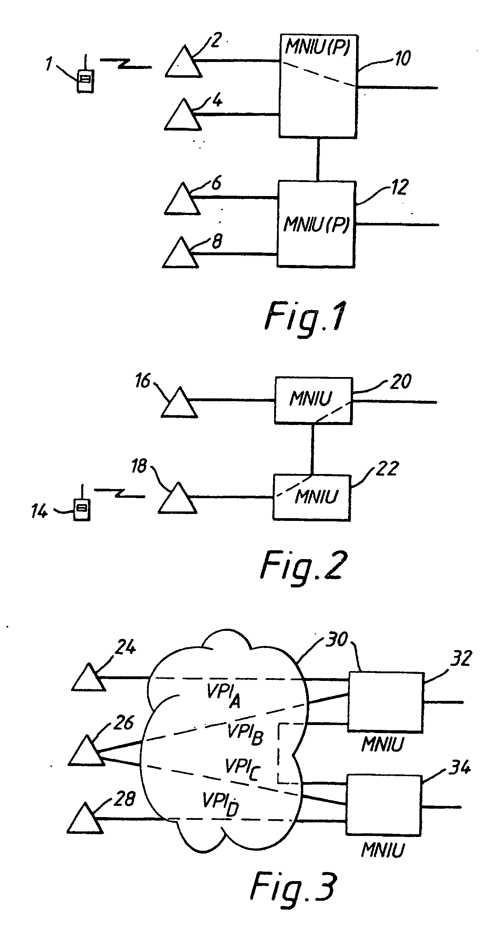

With reference to Figure 1, typically in current networks the network part of the mobile system will consist of base stations 2, 4, 6, 8, connected to mobile network interface units 10, 12. The base stations 2 and 4 are connected to the mobile network interface unit 10, and the base stations 6, 8 are connected to the mobile network interface unit 12. The mobile network interface units 10, 12 could be the point of interconnection between the mobile network and the fixed network for as long as a call is being handled by one of the base stations in its area. Any one base station is connected to only a single mobile network interface unit.

When a mobile unit moves, in a radio sense, to a base station connected to a different mobile network interface unit, network switching is required to extend the connection to the new mobile network interface unit. This switching must be performed at the same times as the mobile terminal changes its affiliation to the new base station, as shown in Figure 2. In Figure 2, the base station 16 is connected to the mobile network interface unit 20, and the base station 18 is connected to the mobile network interface unit 22. At the time when the mobile terminal 14 changes its affiliation from the base station 16 to the base station 18, network switching has to be set up as shown by the dotted lines within the mobile network interface units 20, 22. Extending the call in this way can be relatively slow, due to the need for network signalling and switching and significant breaks in transmission can occur.

In EP 0 426 269 there is described a system for mobile communication which includes a number of base stations with users. Associated with each base station is an interface unit which packetises voice information and includes header information concerning user and destination addresses. These interface units track the movement of the various users by passing control blocks from interface unit to interface unit. Packets are routed via a routing block and switches. The stored information within the base station interfaces allows movement from one base station to allow to be handled without call loss.

An aim of the present invention is to provide an improved mobile radio network in which a minimum of network switching is required to support rapid changes in affiliation when a mobile terminal crosses between areas connected to different mobile network interface units.

According to the present invention there is provided a mobile radio network, comprising at least one mobile terminal and at least three base stations connectable by a transmission network by way of a mobile network interface unit to a fixed network, characterised in that at least one base station is connectable by the transmission network to at least two mobile network interface units, and network switching means is arranged to connect the mobile network interface units together when a mobile terminal changees its affiliation from one base station to a different base station, to permit communication from the mobile terminal to the fixed network by way of said interconnected mobile network interface units.

An embodiment of the present invention will now be described with reference to the accompanying drawings:
FIGURE 1 shows a typical prior art mobile network;
FIGURE 2 shows a prior art mobile network including known switching connections to provide hand over between different mobile network interface units; and,
FIGURES 3 to 8 show various configurations of a mobile network in accordance with the present invention.

In Figures 3 to 8, like elements have been designated with the same reference number.

Referring to Figure 3, there is shown three base stations 24, 26, 28, connected to an ATM network 30. It will be appreciated that the ATM network 30 functions in a manner described in GB 2 268 359.

The ATM network 30 connects the base station 24 to the mobile network interface unit 32, by way of a virtual path identified as VPI_{A}. The base station 26 is connected to the mobile network interface unit 32, by way of a virtual path VPI_{B} and also to the mobile network interface unit 34, by way of a virtual path VPI_{C}. The base station 28 is connected to the mobile network interface unit 34, by way of a virtual path VPI_{D}. The mobile network interface units 32, 34 may also be connected via the ATM network 30. The mobile network interface units 32, 34 are further connected to a respective fixed network.

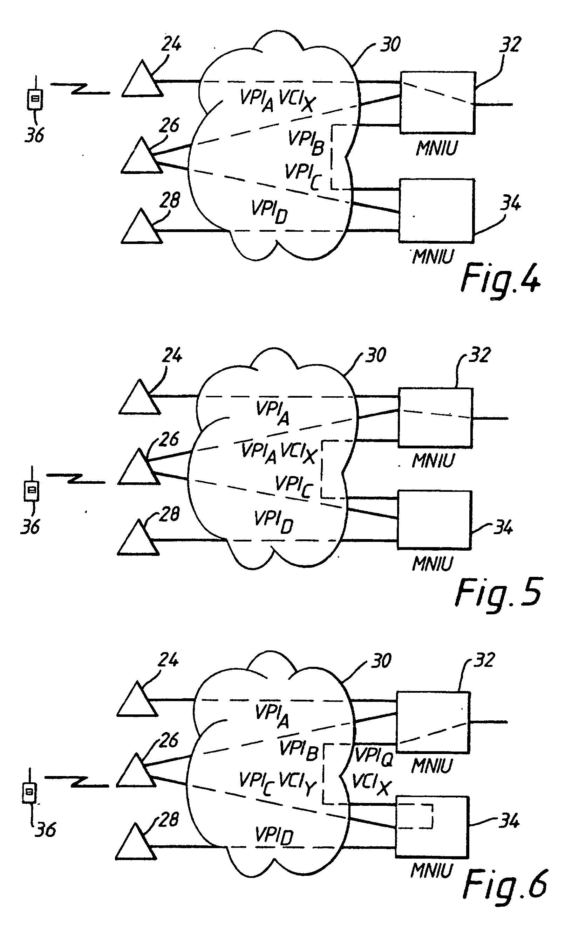

Referring to Figure 4, it is assumed that the mobile terminal 36 is initially affiliated to the base station 24 with the connection being routed to the fixed network via the mobile network interface unit 32, by way of the ATM network 30. Within the area controlled by the mobile network interface unit 32, the call is given the designation X and the user information associated with the call is carried in ATM cells with the VCI value given as VCI_{X}. When the mobile terminal 36 changes geographical location, it becomes affiliated to the base station 26, as shown in Figure 5. The call is still routed through the mobile network interface unit 32, and at this point the mobile terminal 36 could return to the control of the base station 24 without any need for network switching since it is still within the same mobile network interface unit area. When the system controlling the whole network function determines that the mobile terminal 36 should be transferred to an area controlled by the mobile network interface unit 34, which may occur, when for example the radio signal at the base station 28 is determined to be stronger compared with the radio signal at the base station 24, the network is then reconfigured, as shown in Figure 6. Within the area of the mobile network interface unit 34, the call is given the designation Y and the value VCI_{Y} is used in the VCI field of the ATM cell carrying the user information. The mobile network interface unit 32, is still controlling the connection and the connection is extended from the mobile network interface unit 32 to the mobile network interface unit 34, over the ATM network via the path designated VPI_{Q} VCI_{X}. The mobile network interface unit 34 translates the VCI from the value used within its own area (VCI_{Y}) to the value used within the area of control of the mobile network interface unit 32 (VCI_{X}).

It is still possible for the mobile terminal 36 to return to the base station 24, without the need for further network switching.

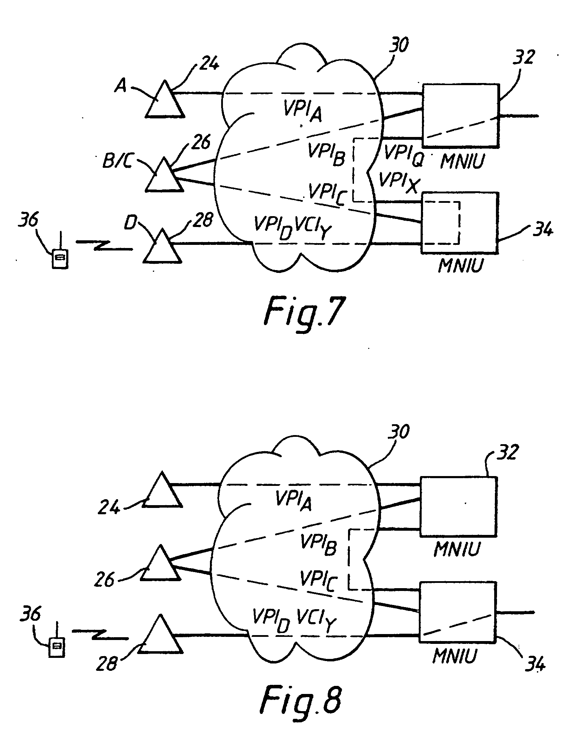

When the mobile terminal 36 moves to the area controlled by the base station 28 which is only connected to the mobile network interface unit 34, as shown in Figure 7, the mobile terminal 36 could still return to either of the previously used base stations without the need for further networks switching, because the connection is still controlled by the mobile network interface unit 32.

Once the mobile terminal 36 is well inside the area controlled by the mobile network interface unit 34, the path to the fixed network can, if required, be optimised and the connection routed directly into the fixed network from the mobile network interface unit 34, as shown in Figure 8.

It will be appreciated by those skilled in the art that the principles described above with reference to two mobile network interface units, and a single dual home base station, could be easily extended to cases where a base station was connected over virtual paths to more than two base stations and where there were more than a single dual home base station involved.

The present invention advantageously allows the teachings as disclosed in the above mentioned co-pending patent application to be extended with a minimum of network switching to the case where a mobile terminal crosses mobile network interface unit boundaries.

The present invention also provides decoupling between when a mobile terminal changes affiliation to a base station and a new mobile network interface unit area, and when the network has to be reconfigured to extend the connection to the new mobile network interface unit. This facilitates the support of frequent and rapid reaffiliation of the mobile terminal at the mobile network interface unit area boundaries and enables macrodiversity to be provided at such locations.

It will also be appreciated that while the above embodiment is described using an ATM network, dedicated lines may be used instead of an ATM network, providing such lines are capable of handling ATM type data to an ATM type mobile network interface unit.

## Claims

1. A mobile radio network, comprising at least one mobile terminal (36) and at least three base stations (24, 26, 28) connectable by a transmission network (30) by way of a mobile network interface unit (32, 34) to a fixed network, **characterised in that** at least one base station (26) is connectable by the transmission network (30) to at least two mobile network interface units (32, 34), and network switching means is arranged to connect the mobile network interface units (32, 34) together when a mobile terminal (36) changes its affiliation from one base station (24, 26, 28) to a different base station (24, 26, 28), to permit communication from the mobile terminal (36) to the fixed network by way of said interconnected mobile network interface units (32, 34).

2. A mobile radio network as claimed in claim 1, wherein the transmission network (30) is an ATM transmission network.

3. A mobile radio network as claimed in claim 1 or 2, wherein each mobile network interface unit (32, 34) is provided with means to optimise the path to the fixed network when a mobile terminal (36) has moved within the area controlled by the mobile network interface (32, 34).

## Patentansprüche

1. Mobilfunknetz bestehend aus mindestens einer Mobilstation (36) und mindestens drei Basisstationen (24, 26, 28), die über ein Übertragungsnetz (30) mit einer MNIU (32, 34) und darüber wiederum mit einem Festnetz verbunden sind. Zumindest eine Basisstation (26) ist über das Übertragungsnetz (30) mit mindestens zwei MNIUs (32, 34) verbunden. Die MNIUs (32, 34) werden zusammengeschaltet, wenn eine Mobilstation (36) von einer Basisstation (24, 26, 28) zu einer anderen Basisstation (24, 26, 28) wechselt, so dass die Kommunikation zwischen Mobilstation (36) und Festnetz über die zusammengeschalteten MNIUs (32, 34) weitergeführt werden kann.

2. Mobilfunknetz nach Anspruch 1, wobei es sich bei dem Übertragungsnetz (30) um ein ATM-Netz handelt.

3. Mobilfunknetz nach Anspruch 1 oder 2, wobei jede MNIU (32, 34) in der Lage ist, den optimalen Pfad zum Festnetz zu schalten, wenn eine Mobilstation (36) innerhalb des von der MNIU (32, 34) abgedeckten Bereichs ihren Standort ändert.

## Revendications

1. Réseau de radiotéléphonie mobile, constitué d'au moins un terminal mobile (36) et d'au moins trois stations de base (24, 26, 28) connectables par un réseau de transmission (30) au moyen d'une unité formant interface de réseau mobile (32, 34) avec un réseau fixe, **caractérisé en ce que** au moins une station de base (26) est connectable par le réseau de transmission (30) à au moins deux unités formant interfaces de réseau mobile (32, 34) et **en ce qu'**un moyen de commutation de réseau est agencé pour connecter les unités formant interfaces de réseau mobile (32, 34) l'une à l'autre lorsqu'un terminal mobile (36) bascule son jumelage d'une station de base (24, 26, 28) vers une station de base différente (24, 26, 28), pour permettre la communication du terminal mobile (36) vers le réseau fixe au moyen desdites unités formant interfaces de réseau mobile interconnectées (32, 34).

2. Réseau de radiotéléphonie mobile selon la revendication 1, dans lequel le réseau de transmission (30) est un réseau de transmission ATM.

3. Réseau de radiotéléphonie mobile selon la revendication 1 ou 2, dans lequel chaque unité formant interface de réseau mobile (32, 34) est pourvue de moyens pour optimiser le trajet vers le réseau fixe lorsqu'un terminal mobile (36) s'est déplacé dans la zone contrôlée par l'interface de réseau mobile (32, 34).
